# EUROPÄISCHE PATENTANMELDUNG

(11) **EP 3 674 658 A1**
(43) Veröffentlichungstag der Anmeldung: **01.07.2020**
(21) Anmeldenummer: 18216013.5
(22) Anmeldetag: 31.12.2018
(51) Int. Cl.: G01C 15/00

(54) **VERFAHREN ZUM ÜBERPRÜFEN UND/ODER KALIBRIEREN EINER HORIZONTALACHSE EINES ROTATIONSLASERS**

(71) Anmelder: Hilti Aktiengesellschaft, 9494 Schaan (LI)
(72) Erfinder: SOJIC, Ivan, 9470 Buchs (CH); ARZANI, Monica, 6800 Feldkirch (AT)
(74) Vertreter: Hilti Aktiengesellschaft Corporate Intellectual Property

(57) **Zusammenfassung**

Verfahren zum Überprüfen und/oder Kalibrieren einer Horizontalachse eines Rotationslasers (11), der einen um eine Rotationsachse (21) rotierbaren Laserstrahl (22) aussendet, mit Hilfe eines Laserempfängers (12). Der Rotationslaser (11) wird in Horizontallage und der Laserempfänger (12) in Längsanordnung ausgerichtet.

## Beschreibung

### Technisches Gebiet

Die vorliegende Erfindung betrifft ein Verfahren zum Überprüfen und/oder zum Kalibrieren einer Horizontalachse eines Rotationslasers gemäß dem Oberbegriff des Anspruchs 1.

### Stand der Technik

Rotationslaser werden im Innen- und Außenbereich für Nivellier- und Markierungsarbeiten eingesetzt, wie die Anzeige von horizontal, vertikal oder schräg verlaufenden Lasermarkierungen auf einer Zielfläche oder die Ermittlung und Überprüfung von waagerechten Höhenverläufen, senkrechten Linien, Fluchtlinien und Lotpunkten. Rotationslaser können in verschiedenen Gerätelagen, die als Horizontallage und Vertikallage ausgebildet sind, angeordnet werden. Dabei werden horizontal einsetzbare Rotationslaser, die ausschließlich in Horizontallage eingesetzt werden, und horizontal und vertikal einsetzbare Rotationslaser, die in Horizontallage und Vertikallage eingesetzt werden, unterschieden. Horizontal einsetzbare Rotationslaser weisen als Geräteachsen eine erste Horizontalachse und eine zweite Horizontalachse auf, die senkrecht zueinander verlaufen und eine Horizontalebene aufspannen. Horizontal und vertikal einsetzbare Rotationslaser weisen als Geräteachse neben der ersten und zweiten Horizontalachse eine Vertikalachse auf, die senkrecht zur Horizontalebene der ersten und zweiten Horizontalachse verläuft.

Um die Genauigkeit eines Rotationslasers im Betrieb zu gewährleisten, muss die Genauigkeit regelmäßig überprüft und bei Überschreiten einer Maximaldifferenz, die der Gerätehersteller definiert hat, eine Kalibrierung des Rotationslasers durchgeführt werden. Dabei wird die Genauigkeit des Rotationslasers für jede Geräteachse separat überprüft. Bekannt sind Verfahren zum Überprüfen und/oder Kalibrieren einer Horizontalachse und Verfahren zum Überprüfen und/oder Kalibrieren einer Vertikalachse. Bei horizontal einsetzbaren Rotationslasern werden nacheinander die erste und zweite Horizontalachse überprüft, wobei die Reihenfolge beliebig ist. Bei horizontal und vertikal einsetzbaren Rotationslasern erfolgt im Anschluss an die Überprüfung der ersten und zweiten Horizontalachse eine Überprüfung der Vertikalachse.

Die Ausrichtung der Geräteachsen in einen definierten Zustand erfolgt mittels einer Nivelliereinrichtung des Rotationslasers. Der definierte Zustand des Rotationslasers in Horizontallage wird als horizontaler Zustand und in Vertikallage als vertikaler Zustand bezeichnet. Die Nivelliereinrichtung umfasst eine erste Nivelliereinheit, die die erste Horizontalachse in einen ersten definierten Zustand ausrichtet, eine zweite Nivelliereinheit, die die zweite Horizontalachse in einen zweiten definierten Zustand ausrichtet, und bei einem vertikal einsetzbaren Rotationslaser eine dritte Nivelliereinheit, die die Vertikalachse in einen dritten definierten Zustand ausrichtet. Die Nivelliereinheiten umfassen jeweils einen Neigungssensor, der die Neigung der Geräteachse misst, und ein Verstellelement, mit dem die Neigung der Geräteachse verstellbar ist. Im Idealfall sind die Neigungssensoren parallel zu den zugeordneten Geräteachsen ausgerichtet. Ist ein Neigungssensor nicht parallel zur zugeordneten Geräteachse ausgerichtet, weist die Geräteachse einen Neigungsfehler auf.

Die Gerätehersteller von Rotationslasern definieren in den Bedienungsanleitungen ihrer Rotationslaser Verfahren zum Überprüfen der Horizontalachsen, die vom Bediener regelmäßig durchzuführen sind, und Verfahren zum Kalibrieren der Horizontalachsen, die vom Bediener durchzuführen sind, wenn die festgelegte Maximaldifferenz für die Horizontalachsen überschritten wird. Die bekannten Verfahren zum Überprüfen der Horizontalachsen basieren auf dem Prinzip einer Umschlagmessung. Die Rotationslaser werden in Horizontallage auf einem stabilen Untergrund oder einem Stativ in einer Messentfernung zu einer Messfläche aufgestellt und die Horizontalachsen des Rotationslasers werden in einen horizontalen Zustand ausgerichtet. Jeder Gerätehersteller definiert die Messentfernung zwischen dem Rotationslaser und der Messfläche und legt eine Maximaldifferenz für die Horizontalachsen fest.

Bei den bekannten Verfahren zum Überprüfen der Horizontalachsen wird der Rotationslaser in einer ersten Winkelposition angeordnet, in der die zu überprüfende Horizontalachse auf die Messfläche ausgerichtet ist, und die Auftreffposition des Laserstrahls auf der Messfläche wird als erster Kontrollpunkt markiert. Der Rotationslaser wird um 180° um die Rotationsachse in eine zweite Winkelposition gedreht, in der die zu überprüfende Horizontalachse in entgegen gerichteter Achsrichtung zur ersten Winkelposition auf die Messfläche ausgerichtet ist, und die Auftreffposition des Laserstrahls auf der Messfläche wird als zweiter Kontrollpunkt markiert. Der Abstand zwischen dem ersten und zweiten Kontrollpunkt auf der Messfläche wird als Differenz bestimmt und mit der vom Gerätehersteller festgelegten Maximaldifferenz für die Horizontalachsen verglichen. Wenn die Differenz grösser als die Maximaldifferenz ist, ist eine Kalibrierung der überprüften Horizontalachse bzw. eine Kalibrierung sämtlicher Geräteachsen des Rotationslasers erforderlich.

Die bekannten Verfahren zum Kalibrieren einer Horizontalachse werden im Anschluss an die Überprüfung der Horizontalachsen durchgeführt, wenn die Differenz zwischen dem ersten und zweiten Kontrollpunkt auf der Messfläche grösser als die Maximaldifferenz ist. Wenn die Position und Ausrichtung des Rotationslasers nicht verändert wurde, kann die Kalibrierung der Horizontalachse mit Hilfe des ersten und zweiten Kontrollpunktes auf der Messfläche vorgenommen werden. Der Rotationslaser wird mittels der Nivelliereinrichtung verstellt, bis die Laserebene in der Mitte zwischen dem ersten und zweiten Kontrollpunkt angeordnet ist. Diese Position der Laserebene wird als neue Nulllage für die Horizontalachse gespeichert. Wurden die Position und/oder die Ausrichtung des Rotationslasers verändert, müssen die Verfahrensschritte zum Überprüfen der Horizontalachse wiederholt werden und die Auftreffpositionen des Laserstrahls auf der Messfläche als neue Kontrollpunkte markiert werden.

Die bekannten Verfahren zum Verfahren zum Überprüfen und/oder Kalibrieren einer Horizontalachse eines Rotationslasers weisen den Nachteil auf, dass die Auftreffpositionen des Laserstrahls vom Bediener manuell auf die Messfläche übertragen werden und für eine automatische Ausführung ungeeignet sind. Außerdem ist die Genauigkeit des Verfahrens von der Sorgfalt des Bedieners beim Bestimmen des Mittelpunktes des Laserstrahls, beim Übertragen des Mittelpunktes auf die Messfläche und beim Bestimmen des Abstandes zwischen den Kontrollpunkten abhängig. Nachteilig ist außerdem, dass die Messentfernung zwischen dem Rotationslaser und der Messfläche bei der Ausführung der Verfahren fest vorgegeben ist.

Aus EP 2 781 880 A1 sind ein Verfahren zum Überprüfen einer Horizontalebene eines Rotationslasers und ein Verfahren zum Kalibrieren der Horizontalebene des Rotationslasers bekannt. Die Horizontalebene des Rotationslasers wird in drei oder mehr als drei beliebigen Winkelpositionen geprüft. Für die Winkelpositionen des Rotationslasers können beliebige Ausrichtungen gewählt werden. Die ausgewählten Winkelpositionen werden anhand einer Richtungsbestimmungsfunktionalität im Rahmen der jeweiligen Verfahrensschritte mitbestimmt. Beim Verfahren zum Überprüfen der Horizontalebene wird der Rotationslaser manuell durch den Bediener oder automatisch mit Hilfe einer motorisierten Drehplattform in die mindestens drei Winkelpositionen angeordnet und die jeweilige Auftreffposition des nivellierten Laserstrahls auf ein Detektionsfeld eines Laserempfängers gespeichert. EP 2 781 880 A1 macht keinerlei Angaben dazu, wie die Kalibrierung der Horizontalebene des Rotationslasers erfolgt. Es heißt lediglich, dass bei Nichterfüllen oder Schlechterfüllen der Anforderungen die für die Strahlhorizontierfunktionalität gespeicherten Kalibrierdaten automatisch durch die Steuer- und Auswerteeinrichtung upgedatet werden.

### Darstellung der Erfindung

Die Aufgabe der vorliegenden Erfindung besteht in der Entwicklung eines Verfahrens zum Überprüfen und/oder Kalibrieren einer Horizontalachse eines Rotationslasers, das von der Entfernung des Rotationsasers zu einem Laserempfänger unabhängig ist. Außerdem soll das Verfahren für eine weitgehend automatische Ausführung geeignet sein.

Diese Aufgabe wird bei dem eingangs genannten Verfahren zum Überprüfen und/oder Kalibrieren einer Horizontalachse eines Rotationslasers erfindungsgemäß durch die Merkmale des unabhängigen Anspruchs 1 gelöst. Vorteilhafte Weiterbildungen sind in den abhängigen Ansprüchen angegeben.

Das Verfahren zum Überprüfen und/oder Kalibrieren einer Horizontalachse eines Rotationslasers, welches mittels eines Laserempfängers und einer Kontrolleinrichtung, die mit dem Rotationslaser und dem Laserempfänger kommunizierend verbunden ist, ausgeführt wird, weist erfindungsgemäß folgende Schritte auf:
▪ der Rotationslaser wird in Horizontallage und der Laserempfänger in Längsanordnung ausgerichtet,
▪ der Rotationslaser wird in einer ersten Winkelposition angeordnet, wobei die Horizontalachse in der ersten Winkelposition im Wesentlichen senkrecht auf ein Detektionsfeld des Laserempfängers ausgerichtet wird,
   - der Rotationslaser wird um einen ersten Neigungswinkel geneigt, wobei mindestens zwei verschiedene Winkelwerte für den ersten Neigungswinkel eingestellt werden,
   - für jeden Winkelwert, der für den ersten Neigungswinkel eingestellt wird, wird die Auftreffposition des geneigten Laserstrahls auf dem Detektionsfeld vom Laserempfänger als erster Kontrollpunkt bestimmt und der Abstand des ersten Kontrollpunktes zu einer Nullposition des Detektionsfeldes wird als erster Abstand gespeichert,
▪ der Rotationslaser wird in einer zweiten Winkelposition angeordnet, wobei die zweite Winkelposition zur ersten Winkelposition um 180° um die Rotationsachse gedreht ist,
   - der Rotationslaser wird um einen zweiten Neigungswinkel geneigt, wobei mindestens zwei verschiedene Winkelwerte für den zweiten Neigungswinkel eingestellt werden,
   - für jeden Winkelwert, der für den zweiten Neigungswinkel eingestellt wird, wird die Auftreffposition des geneigten Laserstrahls auf dem Detektionsfeld vom Laserempfänger als zweiter Kontrollpunkt bestimmt und der Abstand des zweiten Kontrollpunktes zur Nullposition des Detektionsfeldes wird als zweiter Abstand gespeichert,
▪ eine erste Fitfunktion, die den Zusammenhang zwischen dem ersten Neigungswinkel des Rotationslasers und dem ersten Abstand in der ersten Winkelposition abbildet, und eine zweite Fitfunktion, die den Zusammenhang zwischen dem zweiten Neigungswinkel des Rotationslasers und dem zweiten Abstand in der zweiten Winkelposition abbildet, wird bestimmt,
▪ mittels der ersten Fitfunktion und der zweiten Fitfunktion wird ein Neigungswinkel ermittelt, wobei der Neigungswinkel zum Überprüfen und/oder Kalibrieren der Horizontalachse verwendet wird.

Das erfindungsgemäße Verfahren zum Überprüfen und/oder Kalibrieren einer Horizontalachse eines Rotationslasers wird mithilfe eines Laserempfängers in Horizontallage des Rotationslasers und in Längsanordnung des Laserempfängers ausgeführt. Als Horizontallage des Rotationslasers ist die Ausrichtung des Rotationslasers definiert, in der die beiden Horizontalachsen des Rotationslasers senkrecht zur Lotrichtung ausgerichtet sind. Als Längsanordnung ist die Ausrichtung des Laserempfängers definiert, in der die Längsrichtung des Detektionsfeldes parallel zur Lotrichtung ausgerichtet ist.

Der Rotationslaser wird zum Überprüfen und/oder Kalibrieren einer Horizontalachse nacheinander in einer ersten Winkelposition und einer zweiten Winkelposition angeordnet, die sich um 180° voneinander unterscheiden. In der ersten Winkelposition wird der Rotationslaser mittels einer Nivelliereinrichtung und/oder einer Neigungseinrichtung um einen ersten Neigungswinkel α geneigt, wobei mindestens zwei verschiedene Winkelwerte für den ersten Neigungswinkel α eingestellt werden. Für jeden Winkelwert des ersten Neigungswinkels wird die Auftreffposition des geneigten Laserstrahls auf dem Detektionsfeld als erster Kontrollpunkt bestimmt und der Abstand des ersten Kontrollpunktes zur Nullposition des Detektionsfeldes wird als erster Abstand gespeichert. In der zweiten Winkelposition wird der Rotationslaser mittels der Nivelliereinrichtung und/oder der Neigungseinrichtung um einen zweiten Neigungswinkel β geneigt, wobei mindestens zwei verschiedene Winkelwerte für den zweiten Neigungswinkel β eingestellt werden. Für jeden Winkelwert des zweiten Neigungswinkels wird die Auftreffposition des geneigten Laserstrahls auf dem Detektionsfeld als zweiter Kontrollpunkt bestimmt und der Abstand des zweiten Kontrollpunktes zur Nullposition des Detektionsfeldes wird als zweiter Abstand gespeichert.

Die Auswertung der Messwerte erfolgt grafisch oder analytisch. Die Kontrolleinrichtung ermittelt aus den ersten Neigungswinkel α und den zugehörigen ersten Abständen eine erste Fitfunktion, die insbesondere als erste Gerade ausgebildet ist, und aus den zweiten Neigungswinkel β und den zugehörigen zweiten Abständen eine zweite Fitfunktion, die insbesondere als zweite Gerade ausgebildet ist. Der Schnittpunkt der ersten Gerade und der zweiten Gerade definiert den horizontalen Zustand der untersuchten Horizontalachse des Rotationslasers. Im horizontalen Zustand der Horizontalachse sind der Abstand zur Nullposition in der ersten Winkelposition und der Abstand zur Nullposition in der zweiten Winkelposition gleich.

Das erfindungsgemäße Verfahren zum Überprüfen und/oder Kalibrieren einer Horizontalachse hat den Vorteil, dass das Verfahren in beliebigen Entfernungen durchgeführt werden kann und die Entfernung nicht gemessen werden muss. Der Rotationslaser und der Laserempfänger können in einer geeigneten Entfernung angeordnet werden, wobei darauf zu achten ist, dass die Entfernung in der ersten Winkelposition und die Entfernung in der zweiten Winkelposition übereinstimmen. Außerdem ist das Verfahren für eine automatische Ausführung geeignet, wenn der Rotationslaser auf einer motorisierten Drehplattform angeordnet ist und motorisch aus der ersten Winkelposition in die zweite Winkelposition bewegt wird. Bei einer halbautomatischen Ausführung führt der Bediener die Anordnung des Rotationslasers in die erste Winkelposition und zweite Winkelposition auf Anforderung manuell durch, alle anderen Verfahrensschritte werden vom Rotationslaser und Laserempfänger ausgeführt.

In einer bevorzugten Weiterentwicklung des Verfahrens wird mittels der ersten Fitfunktion und der zweiten Fitfunktion ein Neigungswinkel u ermittelt, welcher in der ersten Winkelposition eine erste Differenz zur Nullposition des Detektionsfeldes und in der zweiten Winkelposition eine zweite Differenz zur Nullposition des Detektionsfeldes erzeugt, wobei die erste Differenz und zweite Differenz übereinstimmen. Mithilfe der ersten Differenz der ersten Fitfunktion und der zweiten Differenz der zweiten Fitfunktion zur Nullposition des Detektionsfeldes kann der Neigungswinkel bestimmt werden, bei dem sich die untersuchte Horizontalachse im horizontalen Zustand befindet.

Bevorzugt wird der Neigungswinkel u mit einer gespeicherten Nulllage für die Horizontalachse verglichen. Für jede der beiden Horizontalachsen des Rotationslasers ist in der Kontrolleinrichtung des Rotationslasers eine Nulllage gespeichert. Bei Rotationslasern, die über einen weiten Temperaturbereich eingesetzt werden, können für die Horizontalachsen mehrere temperaturabhängige Nulllagen gespeichert sein. Um die geeignete Nulllage einzustellen, wird die Temperatur gemessen und die entsprechende temperaturabhängige Nulllage ausgewählt.

Besonders bevorzugt wird eine Abweichung zwischen dem Neigungswinkel u und der gespeicherten Nulllage bestimmt und die Abweichung wird mit einer vorgegebenen Maximalabweichung verglichen. Der Neigungswinkel u, der mithilfe des erfindungsgemäßen Verfahrens bestimmt wurde, wird mit der gespeicherten Nulllage für die untersuchte Horizontalachse verglichen. Dazu wird die Abweichung zwischen dem Neigungswinkel u und der gespeicherten Nulllage bestimmt und die Abweichung mit der vorgegebenen Maximalabweichung verglichen.

Besonders bevorzugt wird der Neigungswinkel u als neue Nulllage für die Horizontalachse gespeichert, wenn die Abweichung grösser als die vorgegebene Maximalabweichung ist. Für den Fall, dass die Abweichung zwischen dem Neigungswinkel u und der gespeicherten Nulllage grösser als die vorgegebene Maximalabweichung ist, wird der Neigungswinkel u, der mithilfe des erfindungsgemäßen Verfahrens bestimmt wurde, als neue Nulllage für die untersuchte Horizontalachse gespeichert.

Besonders bevorzugt wird die Horizontalachse in einer weiteren Prüfschleife überprüft, wobei der horizontale Zustand der Horizontalachse durch die neue Nulllage definiert ist. Durch die weitere Prüfschleife kann sichergestellt werden, dass der Neigungswinkel u, der mithilfe des erfindungsgemäßen Verfahrens bestimmt wurde, den horizontalen Zustand der untersuchten Horizontalachse angibt.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: eine Vorrichtung mit einem Rotationslaser in Horizontallage und einem Laserempfänger in Längsanordnung;
- FIGN. 2A-C: den Rotationslaser der FIG. 1 in einer dreidimensionalen Darstellung (FIG. 2A) und die wesentlichen Komponenten des Rotationslasers in einer schematischen Darstellung in einer Vertikalebene (FIG. 2B) und einer Horizontalebene (FIG. 2C);
- FIGN. 3A, B: den Laserempfänger der FIG. 1 in einer dreidimensionalen Darstellung (FIG. 3A) und die wesentlichen Komponenten des Laserempfängers und des Rotationslasers in einer schematischen Darstellung (FIG. 3B);
- FIGN. 4A, B: den Rotationslaser und den Laserempfänger der FIG. 1 bei der Ausführung des erfindungsgemäßen Verfahrens zum Überprüfen und Kalibrieren einer Horizontalachse des Rotationslasers in einer ersten Winkelposition (FIG. 4A) und einer zweiten Winkelposition (FIG. 4B);
- FIGN. 5A, B: die Auftreffpositionen des Laserstrahls auf dem Laserempfänger abhängig von einem Neigungswinkel des Rotationslasers in der ersten Winkelposition (FIG. 5A) und der zweiten Winkelposition (FIG. 5B); und
- FIG. 6: die Auswertung der Messwerte, die in der ersten Winkelposition und der zweiten Winkelposition aufgenommen wurden.

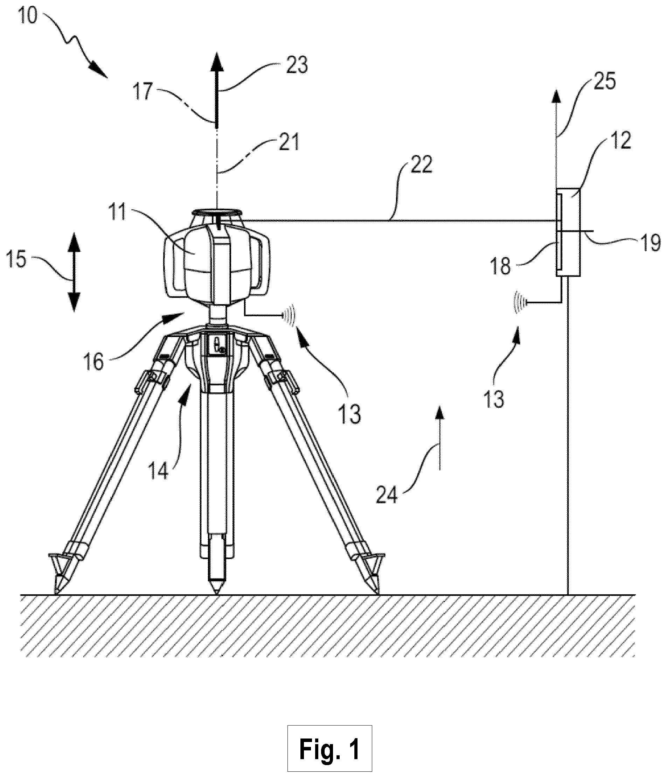

**FIG. 1** zeigt eine Vorrichtung **10** mit einem Rotationslaser **11** und einem Laserempfänger **12,** die über eine drahtlose Kommunikationsverbindung **13** verbindbar sind. Der Rotationslaser 11 ist in Horizontallage angeordnet, die für horizontale Anwendungen des Rotationslasers vorgesehen ist. Der Rotationslaser 11 ist auf einem Stativ **14** angeordnet, das eine Höheneinstellung des Rotationslasers 11 in einer Höhenrichtung **15** ermöglicht. Zusätzlich kann eine als Drehplattform **16** ausgebildete Dreheinrichtung vorgesehen sein, die eine Winkeleinstellung des Rotationslasers 11 um eine Drehachse **17** der Drehplattform 16 ermöglicht. Die Drehplattform 16 kann in das Stativ 14 oder den Rotationslaser 11 integriert sein oder als separate Komponente, die auf dem Stativ 14 angeordnet wird, ausgebildet sein. Der Laserempfänger 12 ist mit einer Messfunktion ausgestattet, die eine Auftreffposition eines Laserstrahls auf ein Detektionsfeld **18** des Laserempfängers 12 ermittelt und den Abstand des Laserstrahls zu einer Nullposition **19** des Detektionsfeldes 18 darstellt.

Der Rotationslaser 11 ist als horizontal und vertikal einsetzbarer Rotationslaser ausgebildet, der einen um eine Rotationsachse **21** des Rotationslasers 11 rotierenden ersten Laserstrahl **22** und einen ruhenden zweiten Laserstrahl **23** aufweist. Der rotierende erste Laserstrahl 22 erzeugt eine Laserebene, die senkrecht zur Rotationsachse 21 angeordnet ist, und der zweite Laserstrahl 23 verläuft senkrecht zur Laserebene des ersten Laserstrahls 22. Bei der in FIG. 1 dargestellten Horizontallage des Rotationslasers 11 wird der erste Laserstrahl 22 verwendet und auf das Detektionsfeld 18 des Laserempfängers 12 ausgerichtet, wobei der Laserempfänger 12 in einer Längsanordnung ausgerichtet ist.

Die Ausrichtung des Laserempfängers 12 ist mittels des Detektionsfeldes 18 und einer Lotrichtung **24** definiert. Das Detektionsfeld 18 des Laserempfängers 12, mit dem die Auftreffposition des ersten oder zweiten Laserstrahls 22, 23 erfasst wird, weist in einer Längsrichtung **25** eine Detektionshöhe **H_{D}** und in einer Querrichtung **26** eine Detektionsbreite **B**_{D} auf. Die Längsrichtung 25 entspricht der Messrichtung des Laserempfängers 12 und die Querrichtung 26 ist senkrecht zur Längsrichtung 25 ausgerichtet, wobei die Längs- und Querrichtung 25, 26 parallel zu einer Oberseite des Detektionsfeldes 18 verlaufen. Als Längsanordnung wird die Ausrichtung des Laserempfängers 12 bezeichnet, in der die Längsrichtung 25 des Detektionsfeldes 18 parallel zur Lotrichtung 24 ausgerichtet ist, und als Queranordnung die Ausrichtung des Laserempfängers 12, in der die Querrichtung 26 des Detektionsfeldes 18 parallel zur Lotrichtung 24 ausgerichtet ist.

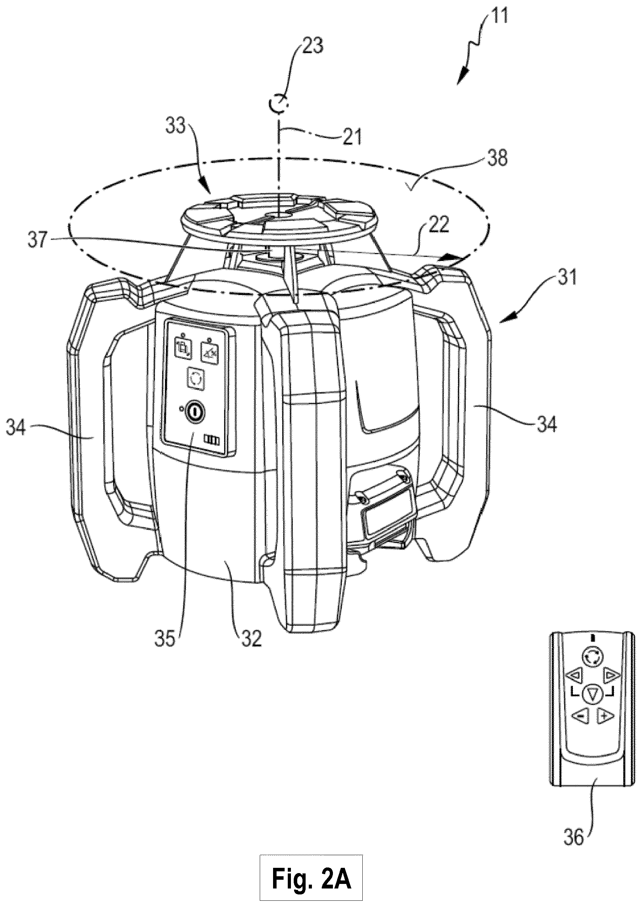

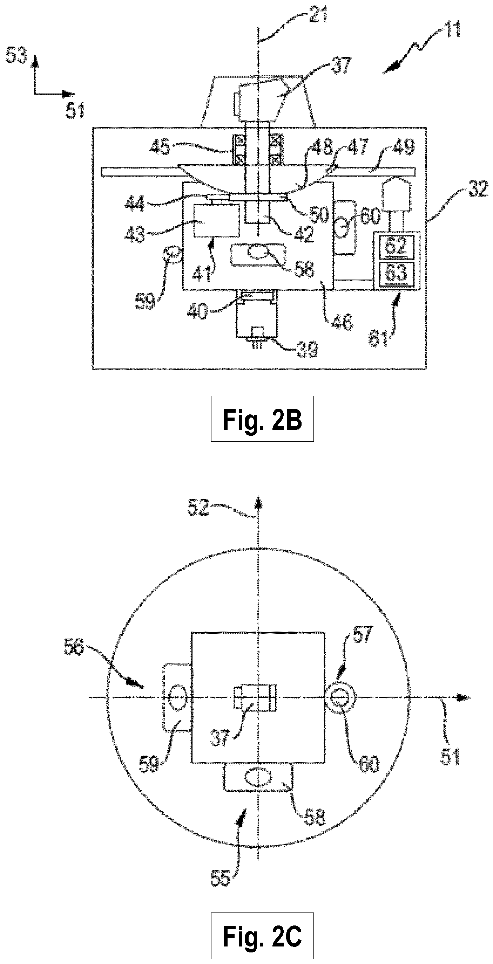

**FIGN. 2A-C** zeigen den Rotationslaser 11 in einer dreidimensionalen Darstellung (FIG. 2A) und die wesentlichen Komponenten des Rotationslasers 11 in einer schematischen Darstellung, wobei FIG. 2B die Komponenten in einer Vertikalebene parallel zur Rotationsachse 21 und FIG. 2C die Komponenten in einer Horizontalebene senkrecht zur Rotationsachse 21 darstellt.

Der Rotationslaser 11 umfasst ein Gerätegehäuse **31** und eine im Gerätegehäuse 31 angeordnete Messeinrichtung. Das Gerätegehäuse 31 besteht aus einem Grundgehäuse **32,** einem Rotationskopf **33** und mehreren Handgriffen **34.** Die Bedienung des Rotationslasers 11 erfolgt über eine Bedienungseinrichtung **35,** die in das Grundgehäuse 32 integriert ist und von außen bedienbar ist. Neben der in das Grundgehäuse 32 integrierten Bedienungseinrichtung 35 kann eine Fernbedienung **36** vorgesehen sein, die über eine Kommunikationsverbindung mit dem Rotationslaser 11 verbindbar ist. Die Messeinrichtung des Rotationslasers 11 erzeugt im Inneren des Grundgehäuses 32 einen Laserstrahl, der auf eine um die Rotationsachse 21 rotierende Umlenkoptik **37** trifft. Ein erster Teil des Laserstrahls wird von der Umlenkoptik 37 um 90° umgelenkt und bildet den ersten Laserstrahl 22 des Rotationslasers 11, der eine Laserebene **38** aufspannt. Ein zweiter Teil des Laserstrahls tritt durch die Umlenkoptik 37 hindurch und bildet den zweiten Laserstrahl 23 des Rotationslasers 11. Abhängig von der Rotationsgeschwindigkeit, mit der der erste Laserstrahl 22 um die Rotationsachse 21 rotiert wird, werden ein Rotationsmodus, ein Linienmodus und ein Punktmodus des Rotationslasers 11 unterschieden.

FIGN. 2B, C zeigen die wesentlichen Komponenten des Rotationslasers 11 in einer schematischen Darstellung. Der Rotationslaser 11 umfasst eine Lasereinrichtung mit einer Strahlquelle **39,** die einen Laserstrahl erzeugt, und einer Kollimationsoptik **40.** Die Strahlquelle 39 ist beispielsweise als Halbleiterlaser ausgebildet, der den Laserstrahl im sichtbaren Wellenlängenspektrum erzeugt, beispielsweise einen roten Laserstrahl mit einer Wellenlänge von 635 nm oder einen grünen Laserstrahl mit einer Wellenlänge von 532 nm. Nach dem Austritt des Laserstrahls aus der Strahlquelle 39 wird der Laserstrahl mit Hilfe der Kollimationsoptik 40 kollimiert. Alternativ kann die Kollimationsoptik in die Strahlquelle integriert sein oder bei einer Strahlquelle 39 mit einer hohen Strahlqualität und geringen Divergenz kann die Kollimationsoptik entfallen.

Der kollimierte Laserstrahl trifft auf die Umlenkoptik 37, die den ersten und zweiten Laserstrahl 22, 23 trennt. Die Umlenkoptik 37 ist mit einer Rotationseinrichtung **41** verbunden, die die Umlenkoptik 37 um die Rotationsachse 21 bewegt. Die Rotationseinrichtung 41 umfasst eine drehbare Welle **42,** eine Motoreinheit **43** und eine Übertragungseinrichtung **44,** die beispielsweise in Form eines Zahnriemens ausgebildet ist und die Bewegung der Motoreinheit 43 auf die Welle 42 überträgt. Die Umlenkoptik 37 ist mit der drehbaren Welle 42 gekoppelt und um die Rotationsachse 21 drehbar ausgebildet. Die Welle 42 ist in einem Drehlager **45** eines Statorteils **46** gelagert, das mit einer Kugelkalotte **47** verbunden ist. Die Kugelkalotte 47 ist in einer Kugelkalottenlagerung **48** in einem gehäusefesten Montagerahmen **49** um zwei zur Rotationsebene (Ebene senkrecht zur Rotationsachse 21) senkrechte Schwenkebenen neigbar gelagert. Der Rotationslaser 11 umfasst eine Messeinrichtung **50,** die den Drehwinkel der Welle 42 während der Rotation um die Rotationsachse 21 misst. Die Messeinrichtung 50 ist beispielsweise als Winkelencoder ausgebildet und besteht aus einer Maßscheibe, die mit der Welle 42 drehfest verbunden ist, einer Abtasteinrichtung, mit der die Maßscheibe abgetastet wird, und einem Auswerte- und Steuerelement.

Der Rotationslaser 11 ist als horizontal und vertikal einsetzbarer Rotationslaser ausgebildet, wobei sich ein horizontal und vertikal einsetzbarer Rotationslaser durch eine zusätzliche Geräteachse von einem horizontal einsetzbaren Rotationslaser unterscheidet. Der Rotationslaser 11 weist als Geräteachsen eine erste Horizontalachse **51** und eine zweite Horizontalachse **52** auf, die senkrecht zueinander verlaufen und eine Geräteebene aufspannen. Die erste und zweite Horizontalachse 51, 52 werden am Rotationskopf 33 des Rotationslasers 11 über Anzeigeelemente angezeigt. Der horizontal und vertikal einsetzbare Rotationslaser 11 weist neben der ersten und zweiten Horizontalachse 51, 52 eine weitere Geräteachse auf, die als Vertikalachse **53** bezeichnet wird und im Idealfall senkrecht zur Geräteebene der ersten und zweiten Horizontalachse 51, 52 ausgerichtet ist.

Der Rotationslaser 11 ist als selbstnivellierender Rotationslaser ausgebildet, der sich automatisch nivelliert, wenn das Gerätegehäuse 31 des Rotationslasers 11 innerhalb eines Selbstnivellierbereiches aufgestellt wird. Der Selbstnivellierbereich von Rotationslasern liegt typischerweise bei 5°. Der Rotationslaser 11 umfasst eine Nivelliereinrichtung **54,** die die Geräteachsen des Rotationslasers 11 unabhängig von einer Ausrichtung des Gerätegehäuses 31 in einen definierten Zustand ausrichtet. Die Nivelliereinrichtung 54 umfasst eine erste Nivelliereinheit **55,** die die erste Horizontalachse 51 in einen ersten definierten Zustand ausrichtet, eine zweite Nivelliereinheit **56,** die die zweite Horizontalachse 52 in einen zweiten definierten Zustand ausrichtet, und eine dritte Nivelliereinheit **57,** die die Vertikalachse 53 in einen dritten definierten Zustand ausrichtet. Bei einem nur horizontal einsetzbaren Rotationslaser entfällt die dritte Nivelliereinheit 57.

Die erste Nivelliereinheit 55 umfasst einen ersten Neigungssensor **58** und ein erstes Verstellelement, die zweite Nivelliereinheit 56 umfasst einen zweiten Neigungssensor **59** und ein zweites Verstellelement und die dritte Nivelliereinheit 57 umfasst einen dritten Neigungssensor **60** und ein drittes Verstellelement. Die Verstellelemente der Nivelliereinheiten 55, 56, 57 sind in eine Neigungseinrichtung **61** integriert, die einen ersten Verstellmotor **62** und einen zweiten Verstellmotor **63** aufweist. Der erste Verstellmotor 62 neigt den Montagerahmen 49 um eine erste Schwenkachse, die mit der zweiten Horizontalachse 52 zusammenfällt, und der zweite Verstellmotor 63 neigt den Montagerahmen 49 um eine zweite Schwenkachse, die mit der ersten Horizontalachse 51 zusammenfällt. Der erste Verstellmotor 62 bildet das erste Verstellelement der ersten Nivelliereinheit 55 und der zweite Verstellmotor 63 bildet das zweite Verstellelement der zweiten Nivelliereinheit 56. Da die Vertikalachse 53 senkrecht zur Horizontalebene der ersten und zweiten Horizontalachse 51, 52 ausgerichtet ist, kann die Ausrichtung der Vertikalachse 53 mittels des ersten und zweiten Verstellmotors 62, 63 eingestellt werden. Der erste und zweite Verstellmotor 62, 63 bilden gemeinsam das dritte Verstellelement der dritten Nivelliereinheit 57.

Die horizontale Ausrichtung der Laserebene bzw. der Gerätebene stellt einen bevorzugten definierten Zustand dar, in den ein Rotationslaser 11 in Horizontallage ausgerichtet werden soll, wobei die horizontal ausgerichtete Geräteebene auch als Horizontalebene bezeichnet wird. Die vertikale Ausrichtung der Laserebene bzw. der Geräteebene stellt einen bevorzugten definierten Zustand dar, in den ein Rotationslaser 11 in Vertikallage ausgerichtet werden soll, wobei die vertikal ausgerichtete Geräteebene auch als Vertikalebene bezeichnet wird. Die Laserebene 38, die der rotierende erste Laserstrahl 22 erzeugt, kann mittels der Neigungseinrichtung 61 gegenüber der Horizontalebene oder der Vertikalebene des Rotationslasers 11 geneigt werden. Der Rotationslaser 11 kann die Laserebene des rotierenden ersten Laserstrahls 22 in einer Neigungsrichtung oder in zwei Neigungsrichtungen neigen. Die Neigung der Laserebene erfolgt im nivellierten Zustand des Rotationslasers 11. Der Rotationslaser 11 kann in Horizontallage oder in Vertikallage geneigt werden.

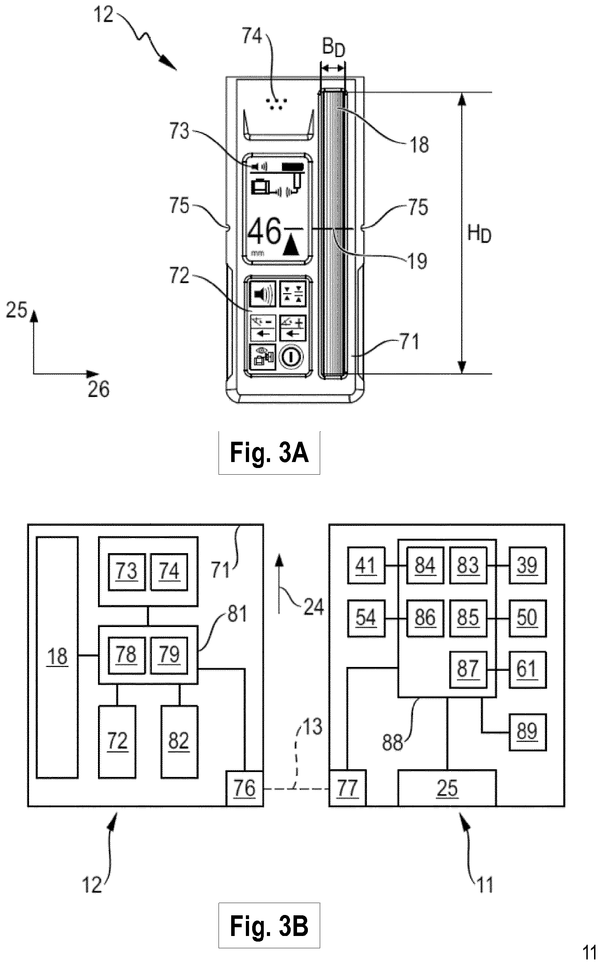

**FIGN. 3A****, B** zeigen den Laserempfänger 12 in einer dreidimensionalen Darstellung (FIG. 3A) und die wesentlichen Komponenten des Laserempfängers 12 sowie das Zusammenwirken mit dem Rotationslaser 11 in einer schematischen Darstellung (FIG. 3B). Der Laserempfänger 12 ist mit einer Messfunktion ausgestattet, die den Abstand eines Laserstrahls zur Nullposition 19 des Detektionsfeldes 18 bestimmt.

Der Laserempfänger 12 umfasst ein Empfängergehäuse **71,** eine Bedienungseinrichtung **72,** ein optisches Display **73,** einen Lautsprecher **74** und das Detektionsfeld 18, mit dem die Auftreffposition eines Laserstrahls erfasst wird. Das Detektionsfeld 18 weist in der Längsrichtung 25 die Detektionshöhe H_{D} und in der Querrichtung 26 die Detektionsbreite B_{D} auf. Die Längsrichtung 25 entspricht der Messrichtung des Laserempfängers 12 und die Querrichtung 26 ist senkrecht zur Längsrichtung 25 ausgerichtet, wobei die Längs- und Querrichtung 25, 26 parallel zum Detektionsfeld 18 verlaufen.

Die Bedienungseinrichtung 72, das optische Display 73, der Lautsprecher 74 und das Detektionsfeld 18 sind in das Empfängergehäuse 71 des Laserempfängers 12 integriert. Über das optische Display 73 kann der Bediener Informationen über den Laserempfänger 12 ablesen. Dazu gehören beispielsweise ein Ladezustand des Laserempfängers 12, Informationen über die drahtlose Kommunikationsverbindung 13 zu einem Rotationslaser 11 und die eingestellte Lautstärke des Lautsprechers 74. Außerdem kann der Abstand eines Laserstrahls zur Nullposition 19 des Laserempfängers 12 als numerischer Wert optisch angezeigt werden. Alternativ oder zusätzlich zur optischen Anzeige auf dem optischen Display 73 kann der Abstand des Laserstrahls über den Lautsprecher 74 mitgeteilt werden. Die Nullposition 19 des Detektionsfeldes 18 kann am Empfängergehäuse 71 über Markierungskerben **75** angezeigt werden.

FIG. 3B zeigt die wesentlichen Komponenten des Laserempfängers 12 und das Zusammenwirken des Laserempfängers 12 mit dem Rotationslaser 11 in Form eines Blockdiagramms. Die Kommunikation zwischen dem Laserempfänger 12 und dem Rotationslaser 11 erfolgt über die Kommunikationsverbindung 13, die eine erste Sende-/Empfangseinheit **76** im Laserempfänger 12 mit einer zweiten Sende-/Empfangseinheit **77** im Rotationslaser 11 verbindet. Die erste und zweite Sende-/Empfangseinheit 76, 77 sind beispielsweise als Funkmodule ausgebildet und die Kommunikation zwischen dem Laserempfänger 12 und dem Rotationslaser 11 erfolgt über eine als Funkverbindung ausgebildete Kommunikationsverbindung 13.

Das Detektionsfeld 18, das optische Display 73 und der Lautsprecher 74 sind mit einer Auswerteeinrichtung **78** verbunden, die im Inneren des Empfängergehäuses 71 angeordnet ist. Die Auswerteeinrichtung 78 ist mit einer Steuereinrichtung **79** zur Steuerung des Laserempfängers 12 verbunden, wobei die Auswerteeinrichtung 78 und die Steuereinrichtung 79 in eine beispielsweise als Mikrocontroller ausgebildete Kontrolleinrichtung **81** integriert sind. Der Laserempfänger 12 umfasst zusätzlich ein Sensormodul **82,** das im Inneren des Empfängergehäuses 71 angeordnet ist und das mit der Kontrolleinrichtung 81 verbunden ist. Mit Hilfe des Sensormoduls 82 kann eine Neigung des Laserempfängers 12 relativ zur Lotrichtung 24 gemessen werden. Das Sensormodul 82 umfasst einen 2-Achsen-Beschleunigungssensor oder zwei 1-Achs-Beschleunigungssensoren.

Zu den Komponenten des Rotationslasers 11, die über Steuerelemente gesteuert werden oder mit einem Auswertelement verbunden sind, gehören die Strahlquelle 39, die Rotationseinrichtung 41, die Messeinrichtung 50 sowie die Nivelliereinrichtung 54 und, falls vorhanden, die Neigungseinrichtung 61. Ein erstes Steuerelement **83** zur Steuerung der Strahlquelle 39, ein zweites Steuerelement **84** zur Steuerung der Rotationseinrichtung 41, ein Auswerte- und Steuerelement **85** für die Messeinrichtung 50, ein drittes Steuerelement **86** zur Steuerung der Nivelliereinrichtung 54 und ein viertes Steuerelement **87** zur Steuerung der Neigungseinrichtung 61 können als getrennte Komponenten ausgebildet sein oder, wie in FIG. 3B dargestellt, in eine gemeinsame Kontrolleinrichtung **88,** die beispielsweise als Mikrocontroller ausgebildet ist, integriert sein. Die Steuerelemente 83, 84, 86, 87 und das Auswerte- und Steuerelement 85 sind über Kommunikationsverbindungen mit den zu steuernden Komponenten des Rotationslasers 11 verbunden. Zur Unterscheidung der Kontrolleinrichtung 81 des Laserempfängers 12 und der Kontrolleinrichtung 88 des Rotationslasers 11 wird die Kontrolleinrichtung 88 des Rotationslasers 11 im Weiteren als erste Kontrolleinrichtung 88 bezeichnet und die Kontrolleinrichtung 81 des Laserempfängers 12 wird im Weiteren als zweite Kontrolleinrichtung bezeichnet.

Die Rotationslaser 11 kann zusätzlich einen Temperatursensor **89** umfassen, der im Gerätegehäuse 31 des Rotationslasers 11 angeordnet ist. Der Temperatursensor 89 kann die Temperatur im Gerätegehäuse 31 messen und die Temperatur an die Kontrolleinrichtung 88 des Rotationslasers 11 übermitteln. Da die Ausrichtung der Neigungssensoren 58, 59, die die erste und zweite Horizontalachse 51, 52 des Rotationslasers 11 in den horizontalen Zustand ausrichten, temperaturabhängig ist und der Rotationslaser 11 in einem großen Temperaturbereich, beispielsweise zwischen -20 °C und +50 °C eingesetzt werden kann, ist es vorteilhaft, wenn in der Kontrolleinrichtung 88 des Rotationslasers 11 mehrere Nulllagen u gespeichert sind. Dazu können für den ersten Neigungssensor 58 mehrere erste Nulllagen υ₁ und für den zweiten Neigungssensor 59 mehrere zweite Nulllagen υ₂ in Abhängigkeit von der Temperatur aufgenommen und in einer Kennlinie oder Tabelle gespeichert werden. Die zur gemessenen Temperatur zugehörige Nulllage wird aus der Kennlinie bzw. Tabelle abgelesen und die Horizontalachse wird in den durch die Nulllage definierten horizontalen Zustand ausgerichtet.

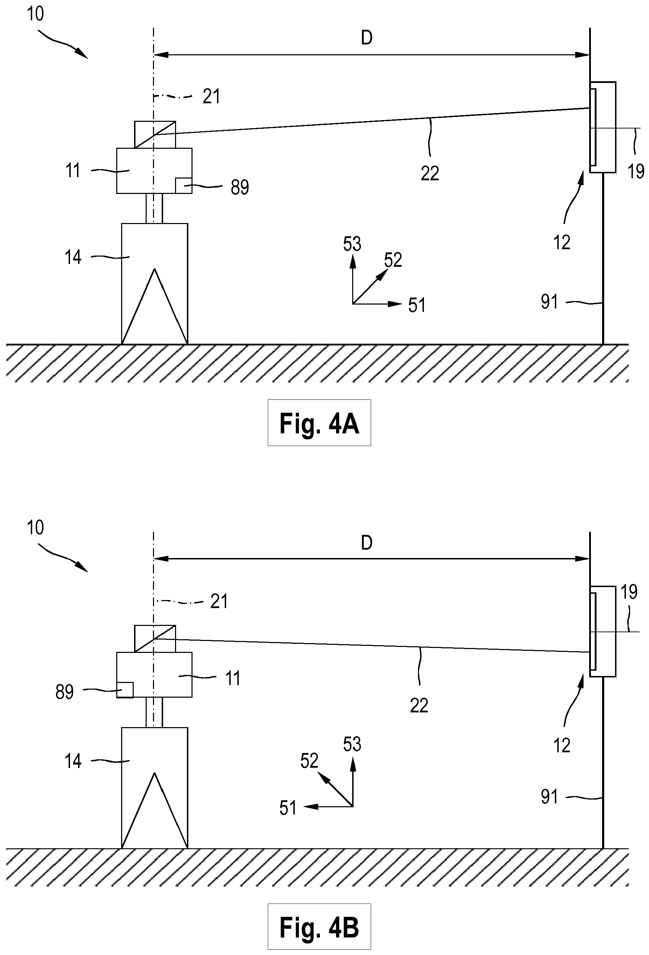

**FIGN. 4A****, B** zeigen die Vorrichtung 10 der FIG. 1 mit dem Rotationslaser 11 und dem Laserempfänger 12 bei der Ausführung des erfindungsgemäßen Verfahrens zum Überprüfen und/oder Kalibrieren einer Horizontalachse 51, 52 des Rotationslasers 11, wobei das Verfahren anhand der ersten Horizontalachse 51 vorgestellt wird. FIG. 4A zeigt den Rotationslaser 11 in einer ersten Winkelposition, in der die zu überprüfende erste Horizontalachse 51 auf den Laserempfänger 12 ausgerichtet ist, und FIG. 4B zeigt den Rotationslaser 11 in einer zweiten Winkelposition, die gegenüber der ersten Winkelposition um 180° um die Drehasche 17 gedreht ist.

Das erfindungsgemäße Verfahren zum Überprüfen und/oder Kalibrieren einer Horizontalachse wird in Horizontallage des Rotationslasers 11 und in Längsanordnung des Laserempfängers 12 ausgeführt. Der Rotationslaser 11 wird in Horizontallage auf dem Stativ 14 oder auf einem stabilen Untergrund in einer Messentfernung **D** zum Laserempfänger 12 aufgestellt, wobei die Messentfernung D zwischen dem Zentrum der Umlenkoptik 37 des Rotationslasers 11 und der Oberseite des Detektionsfeldes 18 des Laserempfängers 12 gemessen wird. Die Verwendung des Stativs 14 hat den Vorteil, dass das erfindungsgemäße Verfahren in einer Höhe durchgeführt wird, in der Temperaturschwankungen geringer ausfallen als am Boden. Der Laserempfänger 12 kann an einer feststehenden Wand, einer mobilen Wand oder einer Messlatte befestigt werden. Im Ausführungsbeispiel ist der Laserempfänger 12 an einer Messlatte **91** befestigt.

Um die Horizontallage des Rotationslasers 11 einzustellen, werden die erste Horizontalachse 51 und die zweite Horizontalachse 52 in einen horizontalen Zustand ausgerichtet, wobei der horizontale Zustand der ersten Horizontalachse 51 durch die erste Nulllage υ₁ des ersten Neigungssensors 58 und der horizontale Zustand der zweiten Horizontalachse 52 durch die zweite Nulllage υ₂ des zweiten Neigungssensors 59 festgelegt ist. Die erste Horizontalachse 51 wird mittels der ersten Nivelliereinheit 55 in die erste Nulllage υ₁ ausgerichtet und die zweite Horizontalachse 52 wird mittels der zweiten Nivelliereinheit 59 in die zweite Nulllage υ₂ ausgerichtet. In der ersten Kontrolleinrichtung 88 des Rotationslasers 11 sind die erste Nulllage υ₁ für den ersten Neigungssensor 58 und die zweite Nulllage υ₂ für den zweiten Neigungssensor 59 gespeichert.

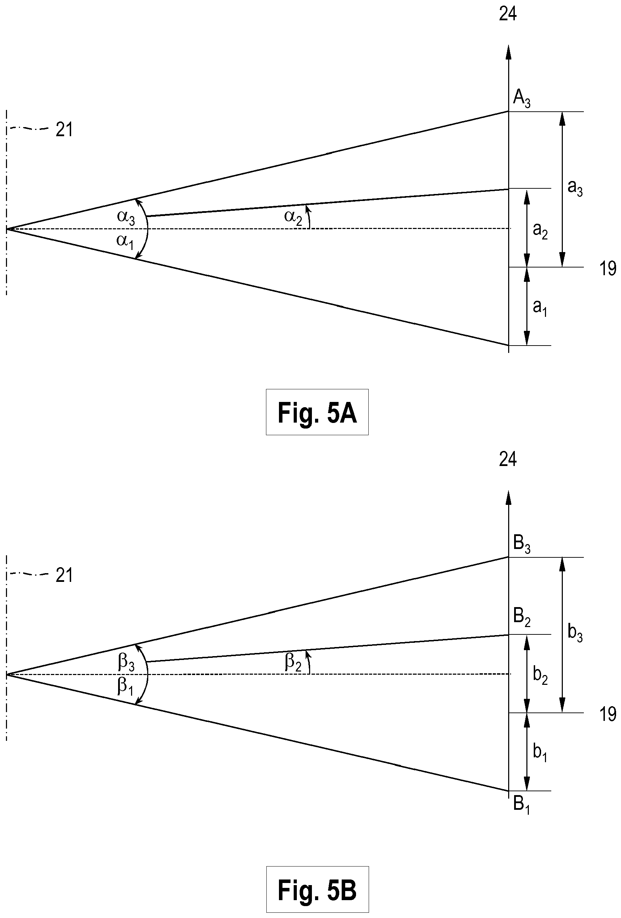

Der Rotationslaser 11 wird zum Überprüfen der ersten Horizontalachse 51 nacheinander in der ersten Winkelposition und der zweiten Winkelposition angeordnet, die sich um 180° voneinander unterscheiden, wobei der Rotationslaser 11 mit Hilfe der Dreheinrichtung 16 oder manuell vom Bediener in die erste Winkelposition und die zweite Winkelposition ausgerichtet werden kann. Der Rotationslaser 11 wird in der ersten und zweiten Winkelposition mittels der Nivelliereinrichtung 54 und/oder der Neigungseinrichtung 61 um einen Neigungswinkel geneigt, wobei verschiedene Winkelwerte für den Neigungswinkel eingestellt werden. Für jeden Winkelwert wird die Auftreffposition des Laserstrahls auf dem Detektionsfeld 18 bestimmt und der Abstand zur Nullposition 19 des Detektionsfeldes 18 gespeichert. **FIGN. 5A****, B** zeigen die Auftreffpositionen des Laserstrahls auf dem Detektionsfeld 18 abhängig vom Neigungswinkel in der ersten Winkelposition (FIG. 5A) und in der zweiten Winkelposition (FIG. 5B).

Der Rotationslaser 11 wird in der ersten Winkelposition angeordnet, in der der Rotationslaser 11 um einen ersten Neigungswinkel α geneigt wird. Die Neigungseinrichtung 54 stellt einen ersten Winkelwert α₁ für den ersten Neigungswinkel α ein, auf dem Detektionsfeld 18 des Laserempfängers 12 wird die Auftreffposition des um α₁ geneigten Laserstrahls als erster Kontrollpunkt **A**₁ bestimmt und der Abstand des ersten Kontrollpunktes A₁ zur Nullposition 19 des Detektionsfeldes 18 wird als erster Abstand **a₁** gespeichert. Die Neigungseinrichtung 61 stellt einen zweiten Winkelwert α₂ für den ersten Neigungswinkel α ein, auf dem Detektionsfeld 18 des Laserempfängers 12 wird die Auftreffposition des um α₂ geneigten Laserstrahls als weiterer erster Kontrollpunkt **A**₂ bestimmt und der Abstand des weiteren ersten Kontrollpunktes A₂ zur Nullposition 19 des Detektionsfeldes 18 wird als weiterer erster Abstand **a₂** gespeichert. Die Neigungseinrichtung 61 stellt einen dritten Winkelwert α₂ für den ersten Neigungswinkel α ein, auf dem Detektionsfeld 18 des Laserempfängers 12 wird die Auftreffposition des um α₃ geneigten Laserstrahls als weiterer erster Kontrollpunkt **A**₃ bestimmt und der Abstand des weiteren ersten Kontrollpunktes A₃ zur Nullposition 19 des Detektionsfeldes 18 wird als weiterer erster Abstand **a₃** gespeichert.

Der Rotationslaser 11 wird aus der ersten Winkelposition um 180° um die Drehachse 17 in die zweite Winkelposition ausgerichtet (FIG. 4B), in der die zu überprüfende erste Horizontalachse 51 in entgegen gerichteter Achsrichtung auf das Detektionsfeld 18 des Laserempfängers 12 ausgerichtet ist. Der Rotationslaser 11 wird um einen zweiten Neigungswinkel β geneigt. Die Neigungseinrichtung stellt einen ersten Winkelwert β₁ für den zweiten Neigungswinkel β ein, auf dem Detektionsfeld 18 des Laserempfängers 12 wird die Auftreffposition des um β₁ geneigten Laserstrahls als zweiter Kontrollpunkt **B₁** bestimmt und der Abstand des zweiten Kontrollpunktes B₁ zur Nullposition 19 des Detektionsfeldes 18 wird als zweiter Abstand **b₁** gespeichert. Die Neigungseinrichtung 61 stellt einen zweiten Winkelwert β₂ für den zweiten Neigungswinkel β ein, auf dem Detektionsfeld 18 des Laserempfängers 12 wird die Auftreffposition des um β₂ geneigten Laserstrahls als weiterer zweiter Kontrollpunkt **B₂** bestimmt und der Abstand des weiteren zweiten Kontrollpunktes B₂ zur Nullposition 19 des Detektionsfeldes 18 wird als weiterer zweiter Abstand **b₂** gespeichert. Die Neigungseinrichtung 61 stellt einen dritten Winkelwert β₃ für den zweiten Neigungswinkel β ein, auf dem Detektionsfeld 18 des Laserempfängers 12 wird die Auftreffposition des um β₃ geneigten Laserstrahls als weiterer zweiter Kontrollpunkt **B₃** bestimmt und der Abstand des weiteren zweiten Kontrollpunktes B₃ zur Nullposition 19 des Detektionsfeldes 18 wird als weiterer zweiter Abstand **b₃** gespeichert.

Im Ausführungsbeispiel der FIGN. 5A, B werden drei Winkelwerte α₁, α₂, α₃ für den ersten Neigungswinkel α und drei Winkelwerte β₁, β₂, β₃ für den zweiten Neigungswinkel β eingestellt. Zur Durchführung des erfindungsgemäßen Verfahrens sind mindestens zwei verschiedene Winkelwerte für den ersten Neigungswinkel α und zwei Winkelwerte für den zweiten Neigungswinkel β erforderlich. Je mehr Winkelwerte für den ersten Neigungswinkel α und den zweiten Neigungswinkel β eingestellt werden, desto genauer können die erste Fitfunktion und die zweite Fitfunktion bestimmt werden.

Die Auswertung kann wie beschrieben von der Auswerteeinrichtung 78 des Laserempfängers 12 durchgeführt werden. Alternativ kann die Auswertung von einer entsprechenden Komponente im Rotationslaser 11 oder einer weiteren Komponente durchgeführt werden. Wenn die Auswertung nicht von der Auswerteeinrichtung 78 des Laserempfängers 12 durchgeführt wird, werden die ersten Abstände a₁, a₂, a₃ und die zweiten Abstände b₁, b₂, b₃ über eine Kommunikationsverbindung an die entsprechende Komponente übermittelt.

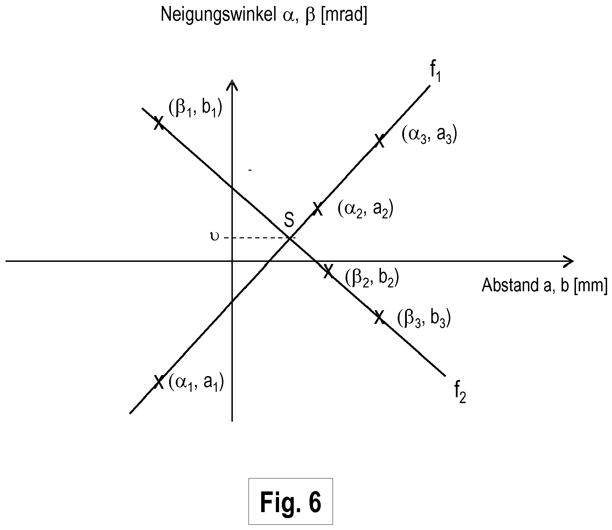

**FIG. 6** zeigt die Auswertung der Messwerte, die in der ersten Winkelposition und der zweiten Winkelposition aufgenommen wurden. Auf der x-Achse ist ein Neigungswinkel aufgetragen, wobei der Begriff "Neigungswinkel" den ersten Neigungswinkel α in der ersten Winkelposition und den zweiten Neigungswinkel β in der zweiten Winkelposition zusammenfasst. Auf der y-Achse ist ein Abstand aufgetragen, wobei der Begriff "Abstand" den ersten Abstand a in der ersten Winkelposition und den zweiten Abstand b in der zweiten Winkelposition zusammenfasst.

Die erste Kontrolleinrichtung 88, des Rotationslasers, die zweite Kontrolleinrichtung 81 des Laserempfängers oder eine weitere Kontrolleinrichtung bestimmt eine erste Fitfunktion **f₁**, die den Zusammenhang zwischen dem ersten Neigungswinkel α und dem ersten Abstand a abbildet, und eine zweite Fitfunktion **f₂**, die den Zusammenhang zwischen dem zweiten Neigungswinkel β und dem zweiten Abstand b abbildet. Im Ausführungsbeispiel sind die erste Fitfunktion f₁ als erste Gerade und die zweite Fitfunktion f₂ als zweite Gerade ausgebildet. Die erste Gerade f₁ und zweite Gerade f₂ schneiden sich in einem Schnittpunkt **S,** der den horizontalen Zustand der untersuchten Horizontalachse des Rotationslasers angibt. Der Schnittpunkt S bestimmt einen Neigungswinkel u, für den gilt, dass ein entsprechend geneigter Laserstrahl in der ersten Winkelposition und der zweiten Winkelposition den gleichen Abstand zur Nullposition 19 des Detektionsfeldes 18 des Laserempfängers 12 aufweist. Wenn der Laserstrahl bei einer Drehung des Rotationslasers 11 um 180° den gleichen Abstand zur Nullposition 19 aufweist, wurde der horizontale Zustand der untersuchten Horizontalachse gefunden.

Für jede der beiden Horizontalachsen 51, 52 des Rotationslasers 11 ist in der Kontrolleinrichtung 88 des Rotationslasers 11 eine Nulllage gespeichert, für die erste Horizontalachse 51 ist eine erste Nulllage υ₁ und für die zweite Horizontalachse 52 eine zweite Nulllage υ₂ gespeichert. Bei Rotationslasern, die über einen weiten Temperaturbereich eingesetzt werden, können für die Horizontalachsen 51, 52 mehrere temperaturabhängige Nulllagen gespeichert sein.

In einer ersten Variante kann der Neigungswinkel u, der mithilfe des erfindungsgemäßen Verfahrens bestimmt wurde, als Nulllage für die untersuchte Horizontalachse 51, 52 definiert werden. In einer alternativen zweiten Variante kann der Neigungswinkel u, der mithilfe des erfindungsgemäßen Verfahrens bestimmt wurde, genutzt werden, um die Abweichung der untersuchten Horizontalachse 51, 52 zu bestimmen. Der Neigungswinkel u wird mit der gespeicherten Nulllage für die untersuchte Horizontalachse verglichen. Dazu wird die Abweichung zwischen dem Neigungswinkel u und der gespeicherten Nulllage bestimmt und mit einer vorgegebenen Maximalabweichung verglichen. Für den Fall, dass die Abweichung zwischen dem Neigungswinkel u und der gespeicherten Nulllage grösser als die vorgegebene Maximalabweichung ist, wird der Neigungswinkel u, der mithilfe des erfindungsgemäßen Verfahrens bestimmt wurde, als neue Nulllage für die untersuchte Horizontalachse gespeichert.

## Patentansprüche

1. Verfahren zum Überprüfen und/oder Kalibrieren einer Horizontalachse (51, 52) eines Rotationslasers (11) mittels eines Laserempfängers (12) und einer Kontrolleinrichtung (81, 88), die mit dem Rotationslaser (11) und dem Laserempfänger (12) kommunizierend verbunden ist, wobei der Rotationslaser (11) einen in einer Laserebene (38) um eine Rotationsachse (21) rotierenden Laserstrahl (22) aussendet, mit den Schritten:
▪ der Rotationslaser (11) wird in Horizontallage und der Laserempfänger (12) in Längsanordnung ausgerichtet,
▪ der Rotationslaser (11) wird in einer ersten Winkelposition angeordnet, wobei die Horizontalachse (51, 52) in der ersten Winkelposition im Wesentlichen senkrecht auf ein Detektionsfeld (18) des Laserempfängers (12) ausgerichtet wird,
- der Rotationslaser (11) wird um einen ersten Neigungswinkel (a) geneigt, wobei mindestens zwei verschiedene Winkelwerte (α₁, α₂, α₃) für den ersten Neigungswinkel (a) eingestellt werden,
- für jeden Winkelwert (α₁, α₂, α₃), der für den ersten Neigungswinkel (a) eingestellt wird, wird die Auftreffposition des geneigten Laserstrahls (22) auf dem Detektionsfeld (18) vom Laserempfänger (12) als erster Kontrollpunkt (A₁, A₂, A₃) bestimmt und der Abstand des ersten Kontrollpunktes (A₁, A₂, A₃) zu einer Nullposition (19) des Detektionsfeldes (18) wird als erster Abstand (a₁, a₂, a₃) gespeichert,
▪ der Rotationslaser (11) wird in einer zweiten Winkelposition angeordnet, wobei die zweite Winkelposition zur ersten Winkelposition um 180° um die Rotationsachse (21) gedreht ist,
- der Rotationslaser (11) wird um einen zweiten Neigungswinkel (β) geneigt, wobei mindestens zwei verschiedene Winkelwerte (β₁, β₂, β₃) für den zweiten Neigungswinkel (β) eingestellt werden,
- für jeden Winkelwert (β₁, β₂, β₃), der für den zweiten Neigungswinkel (β) eingestellt wird, wird die Auftreffposition des geneigten Laserstrahls (22) auf dem Detektionsfeld (18) vom Laserempfänger (12) als zweiter Kontrollpunkt (B₁, B₂, B₃) bestimmt und der Abstand des zweiten Kontrollpunktes (B₁, B₂, B₃) zur Nullposition (19) des Detektionsfeldes (18) wird als zweiter Abstand (b₁, b₂, b₃) gespeichert,
▪ eine erste Fitfunktion (f₁), die den Zusammenhang zwischen dem ersten Neigungswinkel (α₁, α₂, α₃) des Rotationslasers (11) und dem ersten Abstand (a₁, a₂, a₃) in der ersten Winkelposition abbildet, und eine zweite Fitfunktion (f₂), die den Zusammenhang zwischen dem zweiten Neigungswinkel (β₁, β₂, β₃) des Rotationslasers (11) und dem zweiten Abstand (b₁, b₂, b₃) in der zweiten Winkelposition abbildet, werden bestimmt,
▪ mittels der ersten Fitfunktion (f₁) und der zweiten Fitfunktion (f₂) wird ein Neigungswinkel (u) ermittelt, wobei der Neigungswinkel (u) zum Überprüfen und/oder Kalibrieren der Horizontalachse (51, 52) verwendet wird.

2. Verfahren nach Anspruch 1, **dadurch gekennzeichnet, dass** mittels der ersten Fitfunktion (f₁) und der zweiten Fitfunktion (f₂) ein Neigungswinkel (u) ermittelt wird, welcher in der ersten Winkelposition eine erste Differenz zur Nullposition (19) des Detektionsfeldes (18) und in der zweiten Winkelposition eine zweite Differenz zur Nullposition (19) des Detektionsfeldes (18) erzeugt, wobei die erste Differenz und zweite Differenz übereinstimmen.

3. Verfahren nach einem der Ansprüche 1 bis 2, **dadurch gekennzeichnet, dass** der Neigungswinkel (u) mit einer gespeicherten Nulllage (υ₁, υ₂) für die Horizontalachse (51, 52) verglichen wird.

4. Verfahren nach Anspruch 3, **dadurch gekennzeichnet, dass** eine Abweichung (Δ₁, Δ₂) zwischen dem Neigungswinkel und der gespeicherten Nulllage (υ₁, υ₂) bestimmt wird und die Abweichung (Δ₁, Δ₂) mit einer vorgegebenen Maximalabweichung (Δₘₐₓ) verglichen wird.

5. Verfahren nach Anspruch 4, **dadurch gekennzeichnet, dass** der Neigungswinkel als neue Nulllage für die Horizontalachse (51, 52) gespeichert wird, wenn die Abweichung (Δ₁, Δ₂) grösser als die vorgegebene Maximalabweichung (Δₘₐₓ) ist.

6. Verfahren nach Anspruch 5, **dadurch gekennzeichnet, dass** die Horizontalachse (51, 52) in einer weiteren Prüfschleife überprüft wird, wobei der horizontale Zustand der Horizontalachse durch die neue Nulllage definiert ist.
